# EUROPÄISCHE PATENTSCHRIFT

(11) **EP 2 409 174 B1**
(45) Veröffentlichungstag und Bekanntmachung des Hinweises auf die Patenterteilung: **09.09.2015**
(21) Anmeldenummer: 10718434.3
(22) Anmeldetag: 17.03.2010
(51) Int. Cl.: G01S 13/90

(54) **VERFAHREN UND EINRICHTUNG ZUM ERMITTELN VON ASPEKTWINKELVERLÄUFEN**
METHOD AND DEVICE FOR DETERMINING ASPECT ANGLE PROGRESSION
PROCÉDÉ ET DISPOSITIF POUR DÉTERMINER L'ÉVOLUTION DE L'ANGLE D'ASPECT

(30) Priorität: 18.03.2009 DE 102009013768
(43) Veröffentlichungstag der Anmeldung: 25.01.2012
(73) Patentinhaber: Airbus Defence and Space GmbH, 85521 Ottobrunn (DE)
(72) Erfinder: BERENS, Patrick, 45527 Hattingen (DE); HOLZNER, Jürgen, 53343 Wachtberg-Liessern (DE); GEBHARDT, Ulrich, 50321 Brühl (DE)
(74) Vertreter: Riegel, Werner
(86) Internationale Anmeldenummer: PCT/DE2010/000289
(87) Internationale Veröffentlichungsnummer: WO 2010/105605

(56) Entgegenhaltungen:
- EP-A2- 0 550 073
- DE-A1-102006 009 121
- BERENS P ET AL: "Motion Estimation for ISAR Imaging of Ground Moving Vehicles" EUSAR. EUROPEAN CONFERENCE ON SYNTHETIC APETURE REDAR.PROCEEDINGS OF EUSAR,, 1. Januar 2006 (2006-01-01), Seite 4PP, XP009136015 in der Anmeldung erwähnt
- SHIH-KEN CHEN ET AL: "Developing a forward collision warning system simulation" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US LNKD- DOI:10.1109/IVS.2000.898366, 3. Oktober 2000 (2000-10-03), Seiten 338-343, XP010528960 ISBN: 978-0-7803-6363-2
- BERENS P ET AL: "Detection of Curving Ground Vehicles in Radar Data for ISAR Imaging" EUSAR. EUROPEAN CONFERENCE ON SYNTHETIC APETURE REDAR.PROCEEDINGS OF EUSAR,, Bd. 7th Conference, 2. Juni 2008 (2008-06-02), Seite 4PP, XP009136014
- MARTORELLA M ET AL: "Performance analysis of an ISAR contrast-based autofocusing algorithm using real data" RADAR CONFERENCE, 2003. PROCEEDINGS OF THE INTERNATIONAL ADELAIDE, SA, AUSTRALIA 3-5 SEPT. 2003, PISCATAWAY, NJ, USA,IEEE, US LNKD- DOI:10.1109/RADAR.2003.1278705, 3. September 2003 (2003-09-03), Seiten 30-35, XP010688672 ISBN: 978-0-7803-7870-4
- SIMMONS S ET AL: "A new approach to motion estimation for ISAR imaging" PROCEEDINGS OF THE INTERNATIONAL CONFERENCE ON ACOUSTICS, SPEECH, AND SIGNAL PROCESSING (ICASSP). SPEECH PROCESSING 1. ADELAIDE, APR. 19 - 22, 1994; [PROCEEDINGS OF THE INTERNATIONAL CONFERENCE ON ACOUSTICS, SPEECH, AND SIGNAL PROCESSING. (ICASSP)],, Bd. v, 19. April 1994 (1994-04-19), Seiten V/201-V/204, XP010133735 ISBN: 978-0-7803-1775-8
- FABRIZIO BERIZZI ET AL: "Autofocusing of Inverse Synthetic Aperture Radar Images Using Contrast Optimization" IEEE TRANSACTIONS ON AEROSPACE AND ELECTRONIC SYSTEMS, IEEE SERVICE CENTER, PISCATAWAY, NJ, US, Bd. 32, Nr. 3, 1. Juli 1996 (1996-07-01), Seiten 1185-1191, XP011081035 ISSN: 0018-9251

## Beschreibung

Moderne bildgebende luft- und raumgetragene Radarsensoren nutzen das Prinzip "Radar mit synthetischer Apertur" (SAR) zur Abbildung statischer Szenen. Darüber hinaus rückt derzeit die Abbildung bewegter Objekte - z. B. Fahrzeuge - mit dem inversen SAR-Verfahren (ISAR) zunehmend in den Fokus der Anforderungen von Radarsystemen zur Erdbeobachtung und militärischen Aufklärung. Erscheint die Fahrzeugbewegung einerseits zunächst als Störung der relativen Bewegung zwischen dem-Radarsensor und dem Fahrzeug, kann sie bei einer geeigneten Konstellation die Abbildungsleistung verbessern. Im Rahmen eines Systementwurfs kann so ein ISAR-Betriebsmodus angestrebt werden, der die Fahrzeugbewegung gewinnbringend nutzt. Auf dieser Grundlage kann die Dauer einer ISAR-Aufnahme im Vergleich zum Stand der Technik deutlich verkürzt werden, wenn der Kurs eines abzubildenden Fahrzeugs, während seiner Aufnahme z.B. bei dem Durchfahren einer Kurve, eine stetige Richtungsänderung erfährt. Dies ist insbesondere für ein multifunktionales Überwachungsradar wichtig, das vor und nach der ISAR-Datenakquisition Aufgaben in anderen Modi zu erledigen hat.

Im Rahmen der Auswertung von ISAR-Daten tritt das Problem auf, dass die hierfür notwendigen Kenntnisse der Fahrzeugbewegung für die Bilderzeugung im Allgemeinen nicht oder nur mit unzureichender Genauigkeit verfügbar sind. Neben den Entfernungsänderungen zwischen dem Sensor und dem Fahrzeug, die leicht geschätzt und kompensiert werden können, spielt der Aspektwinkelverlauf, unter dem das Radar das Fahrzeug während der Aufnahme beleuchtet und unter dem die Fahrzeugechos empfangen werden, eine entscheidende Rolle. Ändert sich der Aspektwinkel mit konstanter Winkelgeschwindigkeit, so bestimmt diese die Skalierung der Fahrzeugabbildung quer zur Radarblickrichtung. Eine falsche Annahme führt in diesem Fall zu einem verzerrten Bild. Ist darüber hinaus die Winkelgeschwindigkeit nicht konstant, so führt dies zu einer unscharfen Abbildung des Fahrzeuges, die in der Regel unbrauchbar ist.

Eine wesentliche Aufgabe vor der Bilderzeugung stellt daher die Bestimmung des Aspektwinkelverlaufs dar, für die bislang im Stand der Technik keine zufriedenstellende Lösung existiert.

So ist aus dem allgemeinen Kenntnisstand des Fachmanns bereits bekannt, bei einem Multifunktionsradar die Aufgabe der Bestimmung des Aspektwinkelverlaufs in die Verantwortung anderer Betriebsmodi zu geben. Im Rahmen des Systementwurfs wird dabei gefordert, dass vor der Durchführung einer Aufnahme bewegte Fahrzeuge detektiert (MTI) und ihre Spuren verfolgt werden. Aus der Spur eines Fahrzeugs werden dann Informationen über den Aspektwinkelverlauf während der ISAR-Aufnahme abgeleitet.
Diese zeitliche Trennung der Gewinnung von Informationen über die Fahrzeugbewegung und die Akquisition der ISAR-Radarechos führt allerdings zwangsläufig zu einem Problem, wenn sich das Fahrzeug anders als erwartet verhält. Der prädizierte Aspektwinkelverlauf ist dann falsch und unbrauchbar. Zwar könnte dieses Problem durch den Betrieb von MTI, Spurverfolgung und ISAR-Akquisition im Multiplex behoben werden, doch stellt dies eine besondere Herausforderung dar, die selbst anspruchvollste Radarsysteme nur in Ausnahmefällen erfüllen können.

Nach P. Berens und J. H. G. Ender, "Motion Estimation for ISAR Imaging of Ground Moving Targets", EUSAR 2006, Dresden, Mai 2006 wird vorgeschlagen, im Rahmen der ISAR-Verarbeitung die Echos zunächst in Entfernungsrichtung zu komprimieren, wobei auch die translatorische Bewegung (Entfernungsänderung zwischen Sensor und Fahrzeug) kompensiert wird. Anschließend wird die gesamte Dauer der Aufnahme in kurze Intervalle aufgeteilt. Entsprechend dieser Zeitintervalle werden die Daten in sogenannte Azimutsegmente zerlegt. Anschließend werden die Daten dieser Segmente in Azimutrichtung in den Doppler-Frequenzbereich transformiert, so dass eine Folge von Entfernungs-Doppler-Segmenten entsteht. Die Reflektivität des Fahrzeugs erscheint darin grob fokussiert. Aus dem Verlauf der Lage der Reflektivitätsverteilung über alle Segmente hinweg kann anschließend der Aspektwinkelverlauf ermittelt werden.
Als nachteilig wirkt hier aber, dass sich die Reflektivitätsverteilung in den Entfernungs-Doppler-Segmenten selbst stark mit dem Aspektwinkel ändert, was zu Fehlern bei der Schätzung des Aspektwinkelverlaufs führt. Darüber hinaus erfordert das Verfahren selbst bereits eine Anfangsannahme über die Geschwindigkeit, mit der sich der Aspektwinkel ändert.

Aus Shih-Ken et al.:"Developing a forward collision warning system simulation", Intelligent Vehicles Symposium 3-5 OKT 2000, LNKD_DOI:10.1109/ IVS.2000.898366, 3.Oktober 2000, Seiten 338-343 ist ein zu Berens et al. ähnliches jedoch bodengestütztes Radarsystem bekannt.

Aus dem deutschen Patent: DE 10 2006 009 121 A1 ist bekannt, für Fahrzeuge, die mit konstanter Geschwindigkeit fahren, statt der Bestimmung des Aspektwinkelverlaufs, nur die Schätzung zweier Parameter vorzunehmen und mit diesen die Bilderzeugung zu ermöglichen. Obwohl die Bestimmung der beiden erforderlichen Fokussierungsparameter bei diesem eingeführten Verfahren auf sehr einfache Weise erfolgen kann, ist es doch leider für die Bestimmung von Aspektwinkelverläufen mit nicht konstanter Winkelgeschwindigkeit, wie es in der Realität häufig auftritt, nicht nutzbar.

Die Erfindung stellt sich die Aufgabe, aus akquirierten ISAR-Daten eines sich entlang einer Straße bewegenden Fahrzeugs und Informationen über den Straßenverlauf den wahren Aspektwinkelverlauf, unter dem das Radar ein Fahrzeug während der Aufnahme beleuchtet und unter dem die Fahrzeugechos reflektiert und vom Radar empfangen werden, mit einem am Stand der Technik gemessenen, allgemeiner nutzbaren Verfahren, für eine ISAR-Prozessierung zu ermitteln.

Die Aufgabe wird durch ein Verfahren gemäß den Verfahrensschritten des Anspruchs 1 und eine Einrichtung gemäß den Merkmalen des nebengeordneten Anspruchs 2 gelöst.

Nach der erfindungsgemäßen Lösung werden aus den akquirierten ISAR-Daten der Aspektwinkelverlauf, unter dem das Radar ein Fahrzeug während der Aufnahme beleuchtet und unter dem das Fahrzeug die Echos reflektiert, die sodann vom Radarsensor empfangen werden, ermittelt.
Unter der Prämisse, dass die Radardaten allein für eine robuste Bestimmung des Aspektwinkelverlaufs nicht ausreichen, wird unter der Annahme, dass das abzubildende Fahrzeug auf einer Straße fährt, der Straßenverlauf als Zusatzwissen genutzt. Mit Hilfe der Entfernung zwischen dem Radarsensor und dem Fahrzeug sowie der Entfernungsänderung, die beide aus den Radardaten ermittelt sind, werden durch die Verknüpfung mit verfügbaren Straßeninformationen die Position und die Geschwindigkeit des Fahrzeugs zu jedem Zeitpunkt der Aufnahme bestimmt. Als Fahrzeugposition findet man dabei einen Ort der Straße, dessen Entfernung vom Sensor mit der gemessenen Entfernung des Fahrzeugs übereinstimmt. Auf der Position aufbauend wird dann die Fahrzeuggeschwindigkeit bestimmt, indem die Geschwindigkeit in Radarblickrichtung auf die Straßenrichtung an der ermittelten Fahrzeugposition projiziert wird.
Der Aspektwinkel wird anschließend aus den Positionen des Sensors und des Fahrzeugs sowie der Bewegungsrichtung des Fahrzeugs, die der Richtung der Fahrzeuglängsachse entspricht, bestimmt.

Die erforderlichen Straßeninformationen können aus digitalen Karten oder Bildern (z. B. optische Luftbilder, SAR-Bilder) gewonnen werden.
Als Vorteil im Vergleich mit vorbekannten Lösungsansätzen wird der Aspektwinkelverlauf nunmehr aus den akquirierten ISAR-Daten selbst ermittelt. Eine sonst unvermeidliche zeitliche Trennung der Aspektwinkelbestimmung und der ISAR Datenakquisition entfällt damit und der ermittelte Aspektwinkelverlauf spiegelt die tatsächlichen geometrischen Verhältnisse während der Aufnahme wider. Vorteilig stützt sich die Aspektwinkelbestimmung nicht mehr auf die Lage der Reflektivitätsverteilung in den Range-Doppler-Segmenten, sondern wertet im Rahmen der Bewegungskompensation, die vor der eigentlichen Aspektwinkelschätzung erfolgt, nur noch die Position des radiometrischen Schwerpunkts in Entfernung und Doppler aus.

Die Anwendbarkeit der erfindungsgemäßen Lösung ist nicht auf Fahrzeuge mit konstanter Geschwindigkeit eingeschränkt.
Für Fahrzeuge, die auf bekannten Straßen oder Wegen fahren, kann so der Aspektwinkelverlauf, unter dem das Radar das Fahrzeug beleuchtet, ermittelt werden. Seine Berücksichtigung führt im Rahmen der ISAR-Bilderzeugung zu einer scharfen, unverzerrten Abbildung des Fahrzeugs. Darüber hinaus kann die Straßeninformation genutzt werden, gezielt ISAR-Aufnahmen in Bereichen durchzuführen, in denen Fahrzeuge mit für ISAR geeigneten Bewegungen zu erwarten sind.

Nachfolgend wird die Erfindung unter Bezugnahme auf die Zeichnungen im Einzelnen erläutert.

Es zeigen:
Abbildung 1: Ablaufplan des erfindungsgemäßen Verfahrens
Abbildung 2: Blockschaltbild eines ISAR-Systems mit Einrichtung zum Ermitteln des Aspektwinkelveraufs

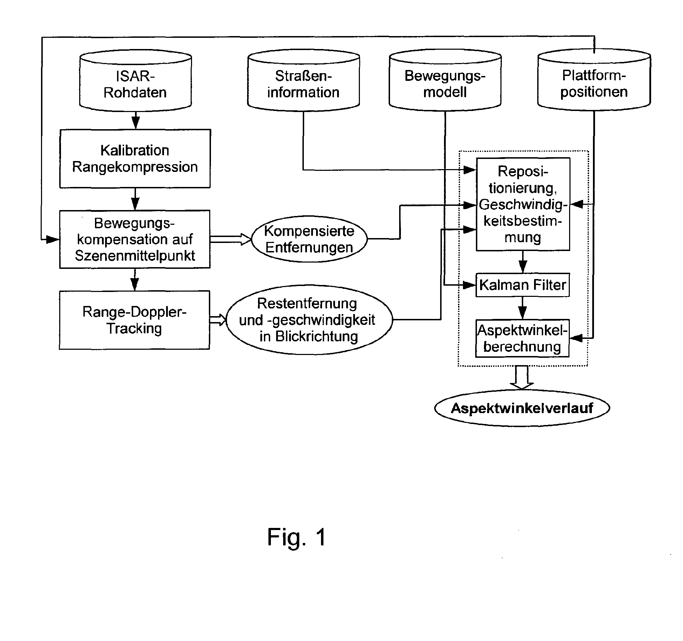

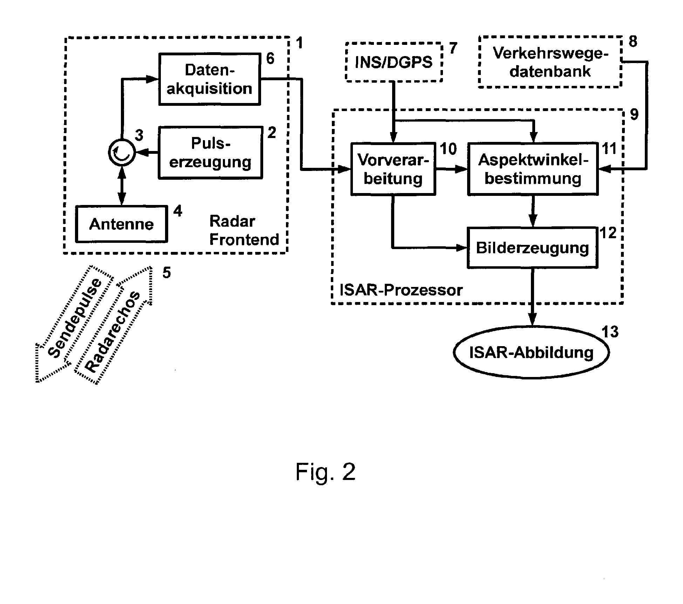

Mit Bezug auf die Abbildungen 1 und 2.

Das neue Verfahren, dargestellt in Abbildung 1, ermittelt den Aspektwinkelverlauf, unter dem das Radar das Fahrzeug während der Aufnahme beleuchtet und unter dem die Fahrzeugechos zum Radar zurück reflektiert werden.
Dazu wird der Entfernungsverlauf zwischen dem Radarsensor und dem Fahrzeug, der aus den aufgenommenen ISAR-Daten selbst ermittelt wird, mit dem Straßenverlauf verknüpft.
In einem ersten Schritt des Verfahrens werden Straßeninformationen für einen geplanten Einsatzbereich des zu verwendenden ISAR aus verifizierten Datensammlungen, digitalen Karten und/oder Luftbildern ermittelt. Weil die zum Verfahrensvollzug notwendige Einrichtung vorzugsweise mittels eines Programms zu steuern ist, sind diese geodätischen Daten in ein für das Verfahren geeignetes Format umzuwandeln. Dazu werden Punkte des Straßenverlaufs in einem lokalen 3-dimensionalen kartesischen Koordinatensystem festgestellt und als Straßeninformation in einem Datenspeicher zur Verfügung für die folgenden Verfahrensschritte eingeschrieben. Liegen die geodätischen Daten in ausreichender Dichte vor, können fehlende Zwischenpunkte durch Interpolation bestimmt werden.

Von einem ISAR wird ein Straßenverlauf beleuchtet, die dabei aufgenommenen ISAR-Rohdaten werden unmittelbar kalibriert und in Entfernungsrichtung komprimiert. Anschließend wird auf den komprimierten Echos im Rahmen der Bewegungskompensation der Entfernungsverlauf zwischen Sensor und Szenenmittelpunkt, der durch die Sensorbewegung verursacht wird, kompensiert.
Liegen zusätzlich Vorinformationen über die Bewegung des Fahrzeugs vor, z. B. von im Voraus durchgeführter Bewegtzieldetektion und Spurverfolgung, so sollen auch diese im Rahmen der Bewegungskompensation berücksichtigt werden. Kompensierte Entfernungen werden für die spätere Verwendung abgespeichert. Im Rahmen des Range-Doppler-Tracking sind zunächst kurze Azimut-Datensegmente in den Doppler-Frequenzbereich zu transformieren, wodurch eine Sequenz von Restentfernungs-Doppler-Bildern entsteht. In den Restentfernungs-Doppler-Bildern kann dann das bewegte Fahrzeug lokalisiert werden, was insbesondere gut gelingt, wenn seine Geschwindigkeit derart ist, dass es in einem Dopplerbereich erscheint, der von den Echos der Szene (Clutter) nicht belegt ist - dieser Fall entspräche einem Exo-Clutter-Ziel. Befindet sich dagegen das Fahrzeug während dieses Verarbeitungsschrittes im Clutter (Endo-Clutter-Ziel), muss der Clutter unterdrückt werden. Das Fahrzeug wird folgend in der Restentfernungs-Doppler-Sequenz weiter verfolgt. Dabei werden mit Hilfe des radiometrischen Schwerpunkts für jedes Restentfernungs-Doppler-Segment ein Restentfernungs- und ein Dopplerwert ermittelt.
Aus dem ermittelten Verlauf der Fahrzeugposition im Doppler, wird nachfolgend ein Restgeschwindigkeitsverlauf bestimmt, der dann die Grundlage darstellt, Mehrdeutigkeiten der Dopplerwerte aufzulösen. Anschließend wird aus dem Verlauf der eindeutigen Dopplerwerte ebenfalls ein Restgeschwindigkeitsverlauf ermittelt. Dieser Restgeschwindigkeitsverlauf und die Restentfernung in Blickrichtung werden für nachfolgende Verarbeitungsschritte verfügbar gehalten.
Die Verläufe der Restentfernung und der Restgeschwindigkeit stellen Werte nach dem vorangegangenen Verfahrensschritt der Kompensation der Sensorbewegung dar. Im Rahmen der Repositionierung und der Geschwindigkeitsbestimmung werden zunächst die ursprünglichen Verläufe der Entfernung und der Geschwindigkeit zwischen dem Sensor und dem Fahrzeug in Blickrichtung durch die Korrektur der Restverläufe entsprechend der kompensierten Entfernungen ermittelt. Anschließend wird aus dem Verlauf der Flugzeugposition, dem ermittelten Entfernungsverlauf sowie der Straßeninformation die Positionen auf der Straße ermittelt, an denen sich das Fahrzeug zu den entsprechenden Zeiten befand. Schließlich wird an den resultierenden Fahrzeugpositionen der ermittelte Geschwindigkeitsverlauf in Blickrichtung in Richtung der Straße projiziert, woraus sich die zugehörigen Geschwindigkeitsvektoren für das Fahrzeug ergeben. Die Blickrichtung wird dabei aus der Plattformposition und der bestimmten Fahrzeugposition ermittelt. Nach dieser Verfahrensweise ergeben sich Verläufe für die Fahrzeugposition und die vektorielle Fahrzeuggeschwindigkeit.
Die so erhaltenen Positionen und Geschwindigkeiten sind durch einen geeigneten Algorithmus (z. B. ein Kalman-Filter) mit dem Bewegungsmodell für das Fahrzeug zu fusionieren. Hierbei dienen die Positionen und Geschwindigkeiten als Messwerte für die Korrektur der mit Hilfe des Bewegungsmodells propagierten Werte. Die Beiträge von Modell und Messwerten gehen ihrer Genauigkeit entsprechend gewichtet in das Ergebnis ein. Dadurch werden letztendlich Position, Geschwindigkeit und Beschleunigung des Fahrzeugs mit anderweitig nicht zu erreichender Genauigkeit zu den gewünschten Zeitpunkten bestimmt.
Die Aspektwinkelberechnung erfolgt nun aus dem Verlauf der Fahrtrichtung (Richtung des Geschwindigkeitsvektors) sowie den Positionen des Radarsensors und des Fahrzeugs. Der resultierende Aspektwinkelverlauf steht anschließend für eine ISAR-Prozessierung zur Verfügung.

Unter Nutzung des erfundenen Verfahrens lässt sich gemäß Abbildung 2 ein luftfahrzeug- oder satellitengetragenes ISAR-System aufbauen, mit dem Fahrzeuge, die sich auf bekannten Verkehrswegen bewegen, mit hoher Auflösung abgebildet werden können.
Ein derartiges System erfordert ein Radar-Frontend 1, eine Einheit zur Erfassung der Sensorbewegung (INS/DGPS) 7, eine Verkehrswegedatenbank, die Straßeninformationen zur Verfügung stellt 8, sowie einen ISAR-Prozessor 9.
Im Radar-Frontend 1 werden in einer Pulserzeugungseinheit 2 hochfrequente Sendepulse mit großer Bandbreite erzeugt, die über einen Zirkulator 3 einer gerichteten Antenne 4 zugeführt werden. Die Antenne 4 beleuchtet mit den erzeugten Pulsen eine Szene am Boden, in der sich ein Fahrzeug entlang einer Straße bewegt und empfängt die reflektierten Echos 5 der Szene. Der Zirkulator 3 leitet die empfangenen Signale an eine Datenakquisitionseinheit 6, die neben der Signalverstärkung und Frequenzverschiebung insbesondere für die Digitalisierung und Speicherung der Daten sorgt.
Der ISAR-Prozessor 9 verarbeitet die aufgezeichneten Echos derart, dass zunächst eine Einheit zur Vorverarbeitung 10 grundlegende Schritte realisiert. Hier werden die Daten kalibriert und einer Kompression in Entfernungsrichtung unterzogen. Darüber hinaus erfolgt eine Bewegungskompensation bezüglich des Szenenmittelpunkts unter Berücksichtigung der Sensorspur, die mit der INS/DGPS-Einheit 7 vermessen wurde. Sind Vorinformationen über die Bewegung des Fahrzeuges bekannt, so werden diese im Rahmen der Bewegungskompensation berücksichtigt. Um Restentfernungen und -geschwindigkeiten zu bestimmen wird darüber hinaus eine Verfolgung des Fahrzeugs im Entfernungs-Doppler-Bereich durchgeführt. Die Einheit zur Aspektwinkelbestimmung 11 vereint die zuvor ermittelten Verläufe der Restentfernung und der -geschwindigkeit aus der Vorverarbeitung 10 mit den von der INS/DGPS-Einheit 7 gemessenen Plattformpositionen sowie den Straßeninformationen aus der Verkehrswegedatenbank 8. Die Bestimmung des Aspektwinkels erfolgt hier entsprechend des zuvor beschriebenen Verfahrens. Die komprimierten und bewegungskompensierten Echos der Vorverarbeitung 10 werden anschließend in der Bilderzeugungseinheit 12 unter Berücksichtigung des ermittelten Aspektwinkelverlaufs zu einer ISAR-Abbildung 13 weiterverarbeitet.

### Bezugszeichenliste:

- 1: Frontend des ISAR-Systems
- 2: Einheit zur Erzeugung von HF-Sendepulsen
- 3: Zirkulator
- 4: Antenne für Senden und Empfang
- 5: Sende- und Empfangssignale
- 6: Einheit zur Aufnahme der empfangenen Signale
- 7: Einheit zur Bestimmung der Plattformposition und -lage auf Basis von INS und DGPS
- 8: Datenbank mit Informationen über Straßenverläufe
- 9: ISAR-Prozessor zur Berechnung von Radarbildern bewegter Fahrzeuge
- 10: Einheit zur Vorverarbeitung
- 11: Einheit zur Bestimmung des Aspektwinkels
- 12: Einheit zur Berechnung des ISAR-Bildes
- 13: Resultierende ISAR-Abbildung des Fahrzeugs

## Patentansprüche

1. Verfahren zum Ermitteln des Verlaufs des Aspektwinkels unter dem ein luftfahrzeug- oder satellitengetragenes Inverses Synthetisches Apertur RADAR, ISAR,
ein auf einer Straße fahrendes Fahrzeug beleuchtet, und unter dem Echos vom Fahrzeug zum Radar zurückreflektiert werden, wobei die Radarsignale selbst für die Aspektwinkelbestimmung genutzt werden, **dadurch gekennzeichnet, dass**
a) aus den ermittelten Entfernungen und Entfernungsänderungen zwischen dem Radarsensor und dem Fahrzeug einerseits und dem Verlauf des Verkehrswegs andererseits für jeden Zeitpunkt der Aufnahme durch Schnittpunktermittlung Fahrzeugpositionen und mit Hilfe geometrischer Umrechnungen die Geschwindigkeitsvektoren des Fahrzeugs an diesen Positionen bestimmt werden,
b) die so erhaltenen Positionen und Geschwindigkeitsvektoren sowie ein Bewegungsmodell für das Fahrzeug mit einem mathematischen Verfahren fusioniert werden, wobei die Beiträge von Modell und Messwerten entsprechend ihrer Genauigkeit gewichtet in das Ergebnis eingehen, womit Position, Geschwindigkeit und Beschleunigung des Fahrzeugs genauer bestimmt werden,
c) aus der Blickrichtung zwischen Radarsensor und Fahrzeug, d. h. der Richtung der Verbindungslinie vom Radarsensor zum Fahrzeug, die sich aus den Positionen von Sensor und Fahrzeug ergibt, und der Richtung des Geschwindigkeitsvektors des Fahrzeugs, dessen Richtung mit der Fahrzeuglängsachse übereinstimmt, der Aspektwinkel der Fahrzeugbeleuchtung für jeden Moment der Aufnahme durch geometrische Berechung ermittelt wird.

2. Einrichtung zum Ermitteln des Verlaufs des Aspektwinkels unter dem ein luftfahrzeug- oder satellitengetragenes Inverses Synthetisches Apertur Radar, ISAR,
ein Fahrzeug, das sich entlang eines Verkehrsweges bewegt, beleuchtet und seine reflektierten Echos empfängt, mindestens bestehend aus Bausteinen eines konventionellen (SAR-Systems,
**gekennzeichnet durch**
a) ein Radar-System, das die Echos reflektierter Radarpulse (5) aufnimmt, welches unter Nutzung von Informationen über die Trägerbewegung eines INSIDGPS-Systems (7) und Straßeninformationen aus einer Verkehrswegedatenbank (8) die ISAR-Abbildung (13) eines bewegten Fahrzeuges berechnet,
b) die Teilfunktionen Pulserzeugung (2), Senden von Pulsen und Empfang von Echos (5) mit einer Antenne (4) und Datenakquisition (6) im Radar-Frontend (1).
c) ein System (7) zur Erfassung von Informationen über die Spur des luft- oder raumgestützten Trägers auf der Basis von inertialen Messsensoren und eines DGPS-Empfängers,
d) eine Datenbank (8), die Informationen über Verkehrswege im vom Radar beleuchteten Bodenbereich bereitstellt,
e) die drei Teilfunktionen Vorverarbeitung (10) zur Kalibration, Kompression und Bewegungskompensation von Radarechos, Aspektwinkelbestimmung (11) gemäß dem Verfahren nach Anspruch 1 und Bilderzeugung (12) zur Berechnung der ISAR-Abbildung (13) im ISAR-Prozessor (9).

3. Speichermedium für Computerprogrammdaten mit darin gespeicherten Programmdaten, wobei die Programmdaten, wenn sie eine Einrichtung gemäß Anspruch 2 steuern, die Einrichtung veranlassen, das Verfahren nach Anspruch 1 auszuführen.

## Claims

1. Method for determining the progression of the aspect angle subject to which an aircraft- or satellite-borne Inverse Synthetic Aperture RADAR, ISAR, illuminates a vehicle traveling on a road and subject to which echoes are reflected back from the vehicle to the radar, wherein the radar signals themselves are used for determining the aspect angle,
**characterized in that**
a) from the distances and changes in distance determined between the radar sensor and the vehicle on the one hand and the course of the thoroughfare on the other, the vehicle positions are determined for every point in time during the exposure by determining the points of intersection and the velocity vectors of the vehicle at these positions are determined using geometric conversions, b) the positions obtained in this way and the velocity vectors as well as the movement model for the vehicle are combined using a mathematical process, whereby the contributions from the model and the measurement values enter into the result weighted according to their accuracy, whereby the position, velocity, and acceleration of the vehicle are determined with greater accuracy,
c) the aspect angle of the vehicle illumination is determined for each moment of the exposure using geometric calculation, from the viewing direction between radar sensor and vehicle, i.e. the direction of the connecting line from radar sensor to the vehicle that results from the positions of the sensor and the vehicle, and the direction of the velocity vector of the vehicle, whose direction coincides with the vehicle longitudinal axis.

2. Device for determining the progression of the aspect angle subject to which an aircraft- or satellite-borne Inverse Synthetic Aperture RADAR, ISAR, illuminates a vehicle that is moving along a thoroughfare and receives its reflected echoes, consisting at least of the components of a conventional ISAR system, **characterized by**
a) a radar-system that acquires the echoes of reflected radar pulses (5) and calculates, using information regarding the carrier movement of an INS/DGPS system (7) and road information from a database of thoroughfares (8), the ISAR image (13) of a moving vehicle,
b) the partial functions of pulse generation (2), transmission of pulses and reception of echoes (5) with an antenna (4), and data acquisition (6) in the radar front end (1),
c) a system (7) for acquiring information regarding the course of the air- or space-borne carrier on the basis of inertial sensors and a DGPS-receiver,
d) a database (8) that provides information regarding thoroughfares in the area illuminated by the radar,
e) the three partial functions of preprocessing (10) for calibration, compression and movement compensation of radar echoes, aspect angle determination (11) according to the method according to Claim 1, and image generation (12) for the calculation of the ISAR image (13) in the ISAR processor (9).

3. Storage medium for computer program data with program data stored therein, **characterized in that** the program data initiate, if they control a device according to Claim 2, the device to implement the method according to Claim 1.

## Revendications

1. Procédé de détermination de l'évolution de l'angle d'aspect grâce auquel un RADAR à synthèse d'ouverture inverse, ISAR, porté par satellite ou par avion éclaire un véhicule circulant sur une route, et grâce auquel des échos sont rétro réfléchis du véhicule au radar, dans lequel les signaux radar sont utilisés même pour la détermination d'angle d'aspect, **caractérisé en ce que**
a) d'après les distances et variations de distance entre le capteur de radar et le véhicule d'un côté et le cours de la voie de circulation d'une autre côté, pour chaque point temporel de la réception par détermination d'intersection des positions du véhicule et, à l'aide de calculs géométriques, les vecteurs de vitesse du véhicule sont déterminés sur ces positions,
b) les positions et vecteurs de vitesse ainsi obtenus ainsi qu'un modèle de mouvement pour le véhicule sont fusionnés avec un procédé mathématique, dans lequel les contributions du modèle et des valeurs de mesure entrent dans le résultat avec leur précision pondérée correspondante, moyennant qui la position, la vitesse et l'accélération du véhicule sont déterminées plus précisément,
c) dans la direction du regard entre le capteur de radar et le véhicule, c'est à dire la direction de la ligne de liaison allant du capteur de radar au véhicule, qui ressort des positions du capteur et du véhicule, et la direction du vecteur de vitesse du véhicule, dont la direction concorde avec l'axe longitudinal du véhicule, l'angle d'aspect de l'éclairage du véhicule pour chaque moment de la prise de vue est déterminé par calcul géométrique.

2. Dispositif de détermination de l'évolution de l'angle d'aspect grâce auquel un RADAR à synthèse d'ouverture inverse, ISAR, porté par satellite ou par avion éclaire un véhicule, qui se déplace le long d'une voie de circulation, et reçoit son écho réfléchi, constitué au moins des modules d'un système ISAR conventionnel, **caractérisé par**
a) un système radar, qui reçoit les échos des impulsions radar (5) réfléchies, lequel calcule en utilisant des informations relatives au mouvement du support d'un système INS/DGPS (7) et des informations de rue provenant d'une banque de données de voie de circulation (8) l'illustration ISAR (13) d'un véhicule déplacé,
b) les fonctions partielles de génération d'impulsions (2), envoi des impulsions et réception des échos (5) avec une antenne (4) et acquisition de données (6) dans l'extrémité avant du radar (1),
c) un système (7) de collecte des informations relatives à la trace du support aérien ou spatial sur la base des capteurs de mesure d'inertie et d'un récepteur DGPS,
d) une banque de données (8), qui fournit des informations relatives aux voies de circulation dans la zone de base éclairée du radar,
e) les trois fonctions partielles de préparation préalable (10) en vue du calibrage, compression et compensation de mouvement des échos radar, détermination d'angle d'aspect (11) conformément au procédé selon la revendication 1 et formation d'image (12) pour calculer l'illustration ISAR (13) dans le processeur ISAR (9).

3. Support de mémorisation pour données de programme informatique comportant des données de programme mémorisées dans celui-ci, dans lequel les données de programme, quand elles commandent un dispositif selon la revendication 2, amènent le dispositif à mettre en oeuvre le procédé selon la revendication 1.
